# EUROPÄISCHE PATENTANMELDUNG

(11) **EP 1 656 859 A2**
(43) Veröffentlichungstag der Anmeldung: **17.05.2006**
(21) Anmeldenummer: 05110107.9
(22) Anmeldetag: 28.10.2005
(51) Int. Cl.: A47G 19/22, A47G 19/02, G09F 23/08

(54) **Trinkgefäß mit einem Relief im Innenraum**

(30) Priorität: 10.11.2004 DE 102004054420
(71) Anmelder: Rastal GmbH & Co. KG, 56203 Höhr-Grenzhausen (DE)
(72) Erfinder: Sahm, Stefan, 56203, Höhr-Grenzhausen (DE)
(74) Vertreter: Wolff, Felix

(57) **Zusammenfassung**

Die vorliegende Erfindung betrifft ein Trinkgefäß (1) mit einem Innenraum (2), bei dem in den Innenraum (2) eine Form (3) eingeprägt ist.

## Beschreibung

Die vorliegende Erfindung betrifft ein Trinkgefäß mit einem Innenraum, bei dem in den Innenraum eine Form eingeprägt ist.

Der Markt verlangt, dass Trinkgefäße heutzutage oftmals beispielsweise mit einem Relief verziert sind. Gleichzeitig müssen diese Trinkgefäße einfach herstellbar und beispielsweise stapel-, lager-, reinig- und/oder transportierbar sein, ohne dass die Verzierung, beispielsweise das Relief, beschädigt wird. Eine weitere Anforderung, die heutzutage an Gläser gestellt wird, ist ein bestimmtes Moussierverhalten bei kohlesäurehaltigen Getränken, so dass die Blasen nicht unkontrolliert sondern vorzugsweise gemäß einem bestimmten Muster aufsteigen.

Es war deshalb die Aufgabe der vorliegenden Erfindung, ein Trinkgefäß zur Verfügung zu stellen, das mindestens eine der oben beschriebenen Eigenschaften aufweist.

Gelöst wird die Aufgabe mit einem Trinkgefäß mit einem Innenraum, wobei in dem Innenraum eine Form eingeprägt ist.

Dieses erfindungsgemäße Trinkgefäß hat den Vorteil, dass es einfach und kostengünstig herzustellen ist. Die Form im Innenraum kann gleichzeitig mit der Herstellung des Trinkgefäßes erfolgen. Dadurch, dass sich die Form im Innenraum befindet, sind die Gläser sehr gut stapel-, lager-, reinig- und/oder transportierbar. Insbesondere wird die Form nicht beschädigt. Überraschenderweise wurde gefunden, dass die Form als Blasenbildungskeim fungiert. Bei kohlensäurhaltigen Getränken steigen die Blasen über der Form auf, so dass vorzugsweise der Eindruck entsteht, dass die Blasen der Form entsteigen.

Ein Trinkgefäß in Sinne der Erfindung ist jedes dem Fachmann geläufige Trinkgefäß, wie beispielsweise ein Becher, eine Tasse oder ein Glas. Es kann aus Glas, vorzugsweise transparentem Kunststoff hergestellt sein.

Erfindungsgemäß ist in dem Innenraum, d. h. in dem Raum, der mit der zu trinkenden Flüssigkeit befüllt wird, eine Form, beispielsweise eine Verzierung, eingeprägt. Diese Form kann durch eine oder mehrere Erhebungen und/oder eine oder mehrere Vertiefungen ausgebildet sein. Des weiteren kann die Form aus Mattierungen bestehen oder Mattierungen aufweisen. Diese Form kann sich an jeder beliebigen Stelle des Innenraums befinden. Vorzugsweise ist die Form jedoch im Bodenbereich, d. h. am unteren Ende des Innenraums angeordnet. Die Form kann jede beliebige Ausgestaltung und Größe aufweisen. Vorzugsweise ist die Form ein Schriftzug, beispielsweise eine Marke sowie ein Logo, oder ein gängiges Symbol, wie beispielsweise ein Kleeblatt, ein Herz oder ein Ball, insbesondere ein Fußball, ein Tennisball oder ein Golfball. Bei einer Ausgestaltung eines Balls ist es ausreichend, wenn die Form die Oberfläche des Balls nur teilweise wiedergibt, jedoch vorzugsweise die für die Erkennung des jeweiligen Balls charakteristischen Merkmale aufweist. Bei einem Fußball sind dies beispielsweise eine Vielzahl von Sechseckformen, die aneinander anliegen. Bei einem Golfball sind es Einbuchtungen und bei einem Tennisball die bekannte geschwungene Form der Naht.

Der Bodenbereich kann gerade, konvex oder konkav gestaltet sein. Falls als Form ein an sich dreidimensionales, insbesondere rundes Objekt, wie beispielsweise ein Herz oder ein Ball gewählt wird, kann der Bodenbereich vorzugsweise in einer konvexen Form gestaltet werden.

Vorzugsweise weist das Trinkgefäß eine durch den Bodenbereich zumindest teilweise sichtbare Fläche auf. Vorzugsweise ist diese Fläche die Fläche, auf der das Trinkgefäß zumindest teilweise steht. Diese Fläche kann als gerade Ebene, konvex und/oder konkav gestaltet sein. Vorzugsweise weist auch diese Fläche Ein- und/oder Ausbuchtungen auf, die vorzugsweis beim Pressen des Trinkgefäßes eingearbeitet werden. Besonders bevorzugt ergänzen diese Ein- und/oder Ausbuchtungen den optischen Eindruck der Form im Innenraum des Trinkgefäßes. Wird beispielsweise als Form im Innenraum ein Teilausschnitt eines Balles gewählt, so ist die Ein- und/oder Ausbuchtung vorzugsweise ebenfalls als Relief der Oberfläche desselben Balls gestaltet.

In einer anderen bevorzugten Ausführungsform ist die Fläche ein Dekor, das vorzugsweise ein Farbdekor und/oder ein Dekor, das durch Mattierung, beispielsweise Ätzung hergestellt wird und das besonders bevorzugt den Eindruck der Form im Innenraum ergänzt, so dass oben durch das Glas betrachtet vorzugsweise eine dreidimensionale Wirkung entsteht.

Vorzugsweise sind die Gläser so gestaltet, das beim Stapeln die Standfläche des einen den Bodenbereich des Innenraums des anderen Glases nicht oder nur teilweise berührt.

Ein weiterer Gegenstand der vorliegenden Erfindung ist ein Verfahren zur Herstellung des erfindungsgemäßen Trinkgefäßes, bei dem ein Innenstempel in eine Masse, vorzugsweise in eine Glasmasse, gedrückt wird, der das Negativ einer in das Glas einzuprägenden Form aufweist.

Dieses Verfahren ist bisher in der Glasherstellungstechnik nicht eingesetzt worden und ist einfach und kostengünstig durchführbar.

Bezüglich der Ausgestaltung der Form wird auf das oben Gesagte verwiesen. Vorzugsweise ist dieses Negativ am unteren Ende des Stempels angeordnet. Dieses Negativ kann beispielsweise das Negativ eines Teils der Oberfläche eines Balls, eines Herzes oder eines Kleeblatts sein. Weiterhin bevorzugt kann das Negativ zur Herstellung eines Schriftzuges, eines Barcodes oder dergleichen dienen.

Vorzugsweise wird gleichzeitig oder nachträglich mit der Herstellung der Form im Innenraum des Trinkgefäßes an dessen Außenseite eine Ein- und/oder Ausbuchtung angeordnet. Bezüglich der Gestaltung der Ein- und/oder Ausbuchtung wird auf das oben Gesagte verwiesen. Vorzugsweise ist diese Ein- und/oder Ausbuchtung so gestaltet, dass sie die Form im Innenraum so ergänzt, dass vorzugsweise ein dreidimensionaler Eindruck entsteht.

In einer anderen bevorzugten Ausführungsform wird bezogen auf den Zeitpunkt der Herstellung der Form nachträglich im Außenbereich des Glases ein Dekor angeordnet, das ganz besonders bevorzugt so gestaltet ist, dass es die Form im Innenraum so ergänzt, dass ein dreidimensionaler Eindruck, beispielsweise eines Balls, eines Herzes oder dergleichen entsteht.

Ein weiterer Gegenstand der vorliegenden Erfindung ist ein Innenstempel zur Herstellung eines Glases, der das Negativ der herzustellenden Form aufweist.

Es war für den Fachmann überaus erstaunlich und nicht zu erwarten, dass mit diesem Innenstempel Gläser, die im Innenraum Ein- und/oder Ausbuchtungen aufweisen, einfach und kostengünstig herzustellen sind.

Vorzugsweise verjüngt sich der Stempel von einem Ende zum anderen, so dass der Stempel aus dem hergestellten Trinkgefäß entformbar ist.

Ganz besonders bevorzugt ist der Stempel an seinem einen Ende konkav, so dass mit ihm eine gewölbte Form, die vorzugsweise zusätzlich noch ein Relief aufweisen kann, herstellbar ist. Dieser Stempel eignet sich insbesondere dann, wenn als herzustellende Form die Teiloberfläche eines Balls hergestellt werden soll.

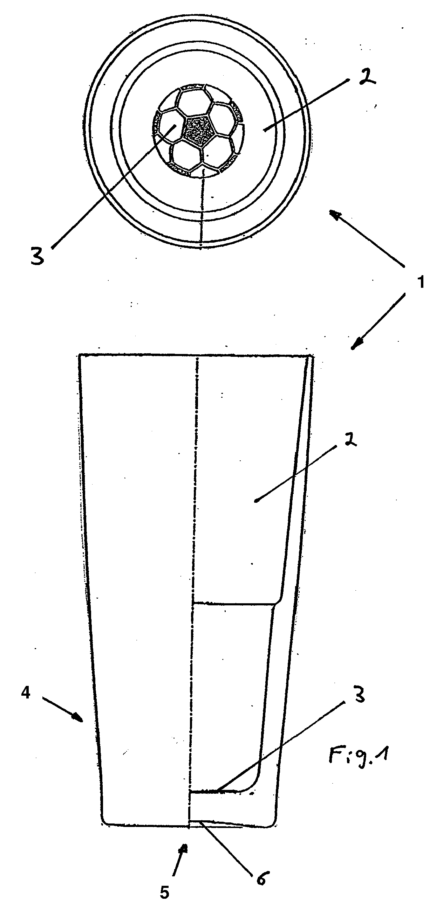

Im folgenden wird die Erfindung anhand von Figur 1 erläutert. Diese Erläuterungen sind lediglich beispielhaft und schränken den allgemeinen Erfindungsgedanken nicht ein. Diese Erläuterungen gelten für alle Gegenstände der Erfindung gleichermaßen.

Figur 1 zeigt das erfindungsgemäße Trinkgefäß 1, dass ein Innenraum 2 mit einem Bodenbereich 4 aufweist. In diesem Bodenbereich 4 ist eine Form 3 eingeprägt, die konvex, d. h. erhaben, ist und die ein Relief in Form der Nähte zwischen den Lederstücken eines Fussballs aufweist, so dass der optische Eindruck entsteht, als sei im Bodenbereich ein Fussball angeordnet. Verstärkt insbesondere in seiner dreidimensionalen Wirkung wird der Eindruck dadurch, dass die konkav gestaltete Bodenfläche 5 des Trinkgefäßes entweder Ein- und/oder Ausprägungen 6 aufweist, die ebenfalls der Oberfläche eines Fussballs ähneln und/oder dass auf diese Fläche 5 ein Dekor, das vorzugsweise schwarz-weiß gestaltet ist, geklebt, gemalt und/oder geätzt wird, so dass sich ebenfalls der Eindruck eines beispielsweise schwarzweißen Fussballs ergibt, so wie er im oberen Teil der Figur dargestellt ist.

## Patentansprüche

1. Trinkgefäß (1) mit einem Innenraum (2), **dadurch gekennzeichnet, dass** im Innenraum eine Form (3) eingeprägt ist.

2. Trinkgefäß nach Anspruch 1, **dadurch gekennzeichnet, dass** die Form (3) im Bodenbereich (4) eingeprägt ist.

3. Trinkgefäß nach Anspruch 2, **dadurch gekennzeichnet, dass** der Bodenbereich (4) konvex ist.

4. Trinkgefäß nach einem der voranstehenden Ansprüche, **dadurch gekennzeichnet, dass** es eine durch den Bodenbereich (4) zumindest teilweise sichtbare Fläche (5) aufweist.

5. Trinkgefäß nach Anspruch 4, **dadurch gekennzeichnet, dass** auf der Fläche (5) mindestens eine Ein- und/oder Ausbuchtungen (6) angeordnet ist.

6. Trinkgefäß nach Anspruch 5, **dadurch gekennzeichnet, dass** die Ein- und/oder Ausbuchtung (6) die Form (3) ergänzt.

7. Trinkgefäß nach Anspruch 6, **dadurch gekennzeichnet, dass** auf der Fläche (5) ein Dekor angeordnet ist.

8. Trinkgefäß nach Anspruch 5, **dadurch gekennzeichnet, dass** die Ein- und/oder Ausbuchtung (6) die Form (3) ergänzt.

9. Verfahren zur Herstellung eines Trinkgefäßes nach einem der Ansprüche 1 - 8, **dadurch gekennzeichnet, dass** ein Innenstempel in eine Masse, vorzugsweise Glas, gedrückt wird, der an seinem Ende das Negativ der Form (3) aufweist.

10. Verfahren nach Anspruch 9, **dadurch gekennzeichnet, dass** die Ein- und/oder Ausbuchtungen (6) gleichzeitig oder nachträglich bezogen auf den Zeitpunkt der Herstellung der Form (3) an dem Trinkgefäß angeordnet wird.

11. Verfahren nach Anspruch 9, **dadurch gekennzeichnet, dass** das Dekor nachträglich bezogen auf den Zeitpunkt der Herstellung der Form (3) an dem Trinkgefäß angeordnet wird.

12. Innenstempel zur Herstellung eines Glases, **dadurch gekennzeichnet, dass** er das Negativ der Form (3) aufweist.

13. Innenstempel nach Anspruch 12, **dadurch gekennzeichnet, dass** die Form (3) ein Relief ist.

14. Innenstempel nach einem der voranstehenden Ansprüche, **dadurch gekennzeichnet, dass** er an seinem einen Ende konkav ist.
